# EUROPÄISCHE PATENTSCHRIFT

(11) **EP 0 849 138 B1**
(45) Veröffentlichungstag und Bekanntmachung des Hinweises auf die Patenterteilung: **11.08.1999**
(21) Anmeldenummer: 97440135.8
(22) Anmeldetag: 17.12.1997
(51) Int. Cl.: B61L 27/04, B61L 3/12

(54) **Verfahren zum Betrieb eines spurgebundenen Fahrzeugs auf Strecken mit gefährlichen Abschnitten sowie Kontrollsystem hierfür**
Operation method for railway vehicle on tracks with dangerous sections and control system therefor
Méthode pour le fonctionnement d'un véhicule ferroviaire sur des voies avec des sections dangereuses ainsi que système de commande pour cela

(30) Priorität: 17.12.1996 DE 19652588
(43) Veröffentlichungstag der Anmeldung: 24.06.1998
(73) Patentinhaber: ALCATEL, 75008 Paris (FR)
(72) Erfinder: Uebel, Helmut, 71229 Leonberg (DE)
(74) Vertreter: Schätzle, Albin, Dipl.-Phys.

(56) Entgegenhaltungen:
- WO-A-94/25324
- DE-A- 3 840 288
- US-A- 4 196 412
- PATENT ABSTRACTS OF JAPAN vol. 016, no. 222 (P-1359), 25.Mai 1992 & JP 04 044087 A (MAZDA MOTOR CORP), 13.Februar 1992,
- DATABASE WPI Section PQ, Week 8930 Derwent Publications Ltd., London, GB; Class Q21, AN 89-218454 XP002062733 & SE 8 704 785 A (INGANNI L)

## Beschreibung

Die Erfindung betrifft ein Verfahren zum Betrieb eines spurgebundenen Fahrzeugs nach dem Oberbegriff des Anspruchs 1 sowie ein Kontrollsystem hierfür.

Mit der Entwicklung der elektronischen Datenverarbeitung ist es möglich geworden, in spurgebundenen Verkehrssystemen, insbesondere Eisenbahnen, den Verkehr vollständig zu automatisieren. Bei einigen dieser automatisierten Verkehrssystemen ist selbst die Anwesenheit eines Triebfahrzeugführers nicht mehr erforderlich. Dies erlaubt im Vergleich zu herkömmlichen Verkehrssystemen einen dichteren Verkehr bei niedrigerem Energieverbrauch. Vor allem jedoch können, besonders bei Untergrund- und Nahverkehrsbahnen, durch einen fahrerlosen Verkehr erhebliche Personalkosten eingespart werden, wie dies etwa in einem Aufsatz von F. Pampel mit dem Titel 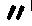 PUSH takes in Hamburg towards unmanned trains in 1985", Railway Gazette International, June 1983, S. 432 - 434, beschrieben ist.

Den niedrigeren Betriebskosten stehen jedoch höhere Investitionen für die Sicherung der Strecke gegenüber. Beim fahrerlosen Verkehr muß sichergestellt werden, daß die Strecke frei von jeglichen Hindernissen ist.

Vor allem muß dafür Sorge getragen werden, daß unter keinen Umständen Menschen den Fahrweg betreten können. Bahnhöfe oder Haltepunkte sichert man beispielsweise durch Bahnsteigtüren, die sich nur dann öffnen, wenn der Zug zum Stehen gekommen ist. Eine Sicherung kann auch durch Video-Überwachungs-Systeme erfolgen. Zwischen den Bahnhöfen werden die Fahrwege oft eingezäunt, aufgeständert oder in Tunneln geführt, so daß Menschen der Zutritt zum Fahrweg versperrt ist.

Bei Untergrundbahnen etwa, bei deren Bau die Kosten für die Untertunnelung dominieren, sind derartige Sicherungsmaßnahmen finanziell tragbar. Bei automatischen Nahverkehrsmitteln, die (auch) im außerstädtischen Bereich fahren sollen, sind diese Kosten jedoch häufig die Ursache dafür, daß auf eine Automatisierung des Verkehrs verzichtet wird. Ähnlich liegen die Verhältnisse im Güterverkehr mit kleinen Ladungseinheiten. Hier ist man bestrebt, einen automatischen fahrerlosen Verkehr auf schwach befahrenen Nebenstrecken einzuführen, für den sich Sicherungsmaßnahmen der genannten Art nicht rentieren.

Es ist daher Aufgabe der Erfindung, ein Verfahren zum Betrieb eines spurgebundenen Fahrzeugs anzugeben, welches Vorrichtungen zur Durchführung eines automatischen fahrerlosen Verkehrs hat. Das Verfahren soll teure bauliche Maßnahmen überflüssig machen, die dazu dienen, Menschen vom Betreten der Strecke abzuhalten. Es ist weiter Aufgabe der Erfindung, ein Kontrollsystem anzugeben, welches in spurgebundene Fahrzeuge eingebaut werden kann und mit dessen Hilfe das erfindungsgemäße Betriebsverfahren durchgeführt werden kann.

Die Erfindung löst diese Aufgabe mit Hilfe der in Anspruch 1 bzw. 3 aufgeführten Merkmale. Die Erfindung geht von der Überlegung aus, daß in Bereichen geringer Siedlungsdichte meist nur einige wenige Streckenabschnitte oder Punkte gefährlich in dem Sinne sind, daß Hindernisse das Passieren eines Fahrzeugs verhindern oder daß Menschen die Strecke betreten können. Erfindungsgemäß wird nur im Bereich dieser gefährlichen Streckenabschnitte oder Punkte eine Überwachung durch eine Bedienperson gefordert. Ein Kontrollsystem im Fahrzeug stellt sicher, daß das Fahrzeug nur dann in einen gefährlichen Streckenabschnitt einfahren kann, wenn die Bedienperson - etwa durch Drücken einer Taste - quittiert, daß sie die Überwachung des Fahrweges übernommen hat. Vorzugsweise ist die Bedienperson eine sich dauerhaft auf dem Fahrzeug befindende Person, etwa ein Zugbegleiter. In diesem Fall kann es ausreichen, der Bedienperson nur die Durchführung der einfachsten Bedienhandlungen zu ermöglichen, z. B. das Einleiten eines Not- oder betrieblichen Halts sowie das Anfahren nach einem Not- oder betrieblichen Halt.

Für den Personenverkehr ermöglicht es das erfindungsgemäße Verfahren somit, mit minimalen Personal- und Kostenaufwand einerseits einen fahrtechnisch sicheren Verkehr, andererseits die für die Fahrgäste wichtige Betreuung am Platz zu gewährleisten. Vor allem jedoch erlaubt das Verfahren bei nur geringen Zusatzkosten einen weitgehend fahrerlosen spurgebundenen Verkehr auf Strecken, für die sich bauliche Sicherungsmaßnahmen nicht rentieren.

Vorteilhafte Ausgestaltungen der Erfindung sind den Unteransprüchen und den Ausführungsbeispielen entnehmbar.

Die Erfindung wird nachfolgend anhand der Ausführungsbeipiele und der Zeichnungen eingehend erläutert. Es zeigen:
- Fig. 1:: Blockdiagramm für das erfindungsgemäße Betriebsverfahren nach Anspruch 1,
- Fig. 2a und 2b:: Anschauliche Darstellung zur Erläuterung des erfindungsgemäßen Betriebsverfahrens,
- Fig. 3:: Schematische Darstellung eines erfindungsgemäßen Kontrollsystems zur Ausführung des Betriebsverfahrens,
- Fig. 4:: Schematische Darstellung eines vorteilhaften Ausführungsbeispiels eines erfindungsgemäßen Kontrollsystems.

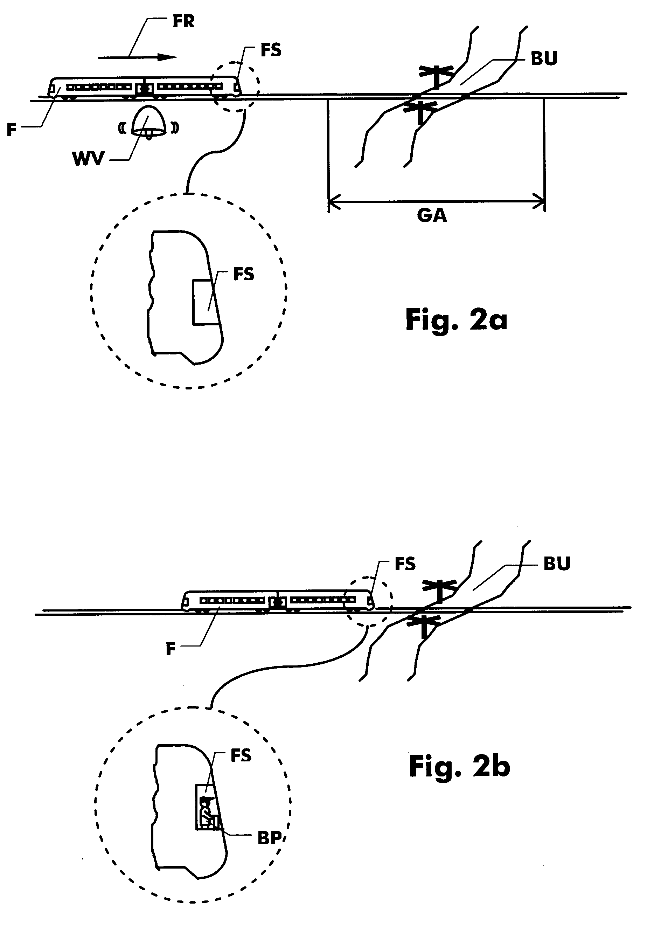

Zur Erläuterung des erfindungsgemäßen Betriebsverfahrens wird nachfolgend zunächst auf Fig. 2a und 2b Bezug genommen. Fig. 2a zeigt ein in Fahrtrichtung FR fahrendes spurgebundenes Fahrzeug F, hier dargestellt als Schienentriebfahrzeug. Wie in der vergrößerten Darstellung des Führerstandes FS erkennbar, fährt das Fahrzeug in diesem Streckenabschnitt fahrerlos. Das Fahrzeug F verfügt zu diesem Zweck über Vorrichtungen zur Durchführung eines automatischen fahrerlosen Verkehrs, wie sie an anderer Stelle eingehend beschrieben sind, siehe beispielsweise die o. a. Veröffentlichung oder die Patentschrift US-A-4017044.

Der folgende, mit GA gekennzeichnete Streckenabschnitt ist als gefährlich eingestuft, in diesem Beispiel wegen eines technisch nicht gesicherten Bahnüberganges BU. Eine sich im Fahrzeug befindende Bedienperson BP, etwa ein Zugbegleiter, wird durch ein Warnvorrichtung WV darauf hingewiesen, daß sich der Zug einem gefährlichen Streckenabschnitt GA nähert. Die Bedienperson BP sucht daraufhin den Führerstand FS des Fahrzeugs F auf (Fig. 2b) und übernimmt die Überwachung der vor ihm liegenden Strecke. Im Führerstand FS sind Bedienelemente, mittels derer die Bedienperson BP einen Not- oder betrieblichen Halt einleiten kann, falls ein Hindernis den Fahrweg versperrt oder ein Mensch den Fahrweg betritt oder zu betreten im Begriffe ist.

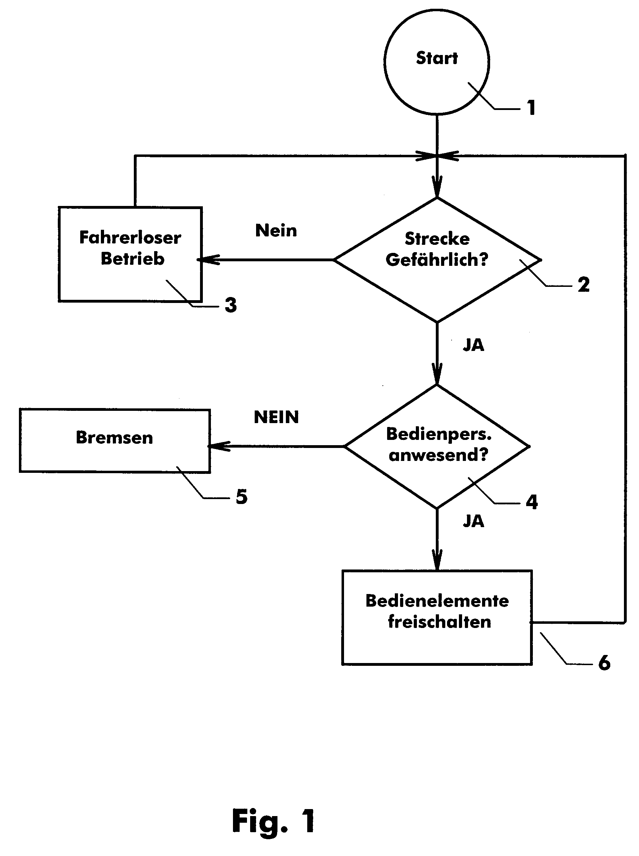

Falls die Bedienperson nicht rechtzeitig die Überwachung übernimmt, so veranlaßt ein vorzugsweise im Fahrzeug F angeordnetes Kontrollsystem, daß das Fahrzeug F noch vor dem Einfahren in den gefährlichen Streckenabschnitt GA zum Stehen kommt. Im einzelnen laufen dabei die folgenden, anhand der Fig. 1 erläuterten Verfahrensschritte im Kontrollsystem ab: Nach dem Start 1 des erfindungsgemäßen Betriebsverfahrens prüft das Kontrollsystem in einem Schritt 2 fortlaufend, ob der gerade befahrene Streckenabschnitt gefährlich ist oder nicht. Falls beispielsweise eine Bedienperson rechtzeitig gewarnt werden soll, so muß sichergestellt sein, daß nicht nur die Gefährlichkeit des gerade befahrenen, sondern auch die Gefährlichkeit des oder der vorausliegenden Streckenabschnitte überprüft wird.

Gefährliche Streckenabschnitte oder Punkte in diesem Sinne können beispielsweise sein:
- Ein- und Ausfahrten an Bahnhöfen und Haltepunkten, bei denen Fahrgäste auf den Fahrweg gelangen können,
- Streckenabschnitte mit parallel zum Fahrweg verlaufenden Fußwegen, bei denen der Fahrweg gelegentlich als zweiter Fußweg genutzt wird,
- Streckenabschnitte, an denen Anwohner über den Fahrweg überqueren, um Fußwege zu verkürzen.

Es gibt verschiedene Möglichkeiten, wie das Fahrzeug F die Gefährlichkeit eines Streckenabschnittes feststellen kann. Bei Eisenbahnen läßt sich beispielsweise eine vorhandene Linienzugbeeinflussung (LZB) nutzten, um dem Triebfahrzeug Informationen über die Gefährlichkeit von Streckenabschnitten zu übermitteln. Ebenso ist es möglich, über Balisen oder kurze Schleifen ein vorbeifahrendes Fahrzeug darauf hinzuweisen, daß ein gefährlicher Streckenabschnitt voraus liegt. Gegebenenfalls ist auch eine Funkübertragung denkbar, sofern das Fahrzeug mit Vorrichtungen zu seiner eigenen Ortsbestimmung, beruhend z. B. auf dem Global Positioning System (GPS), ausgestattet ist. Arbeitsrotten könnten über eigene Sender verfügen, mittels derer ein sich im Fahrzeug befindender Empfänger erkennen kann, daß ein Streckenabschnitt für die Dauer der Arbeiten als gefährlich eingestuft wird.

Ferner können die Informationen über die Gefährlichkeit von Streckenabschnitten dauerhaft in einem elektronischen Streckendaten-Speicher enthalten sein. Der Speicher kann zusätzlich oder alternativ zum dauerhaften Speicher einen RAM-Speicherbereich haben, in dem zwischenzeitlich die einmalig über Balisen oder kurze Schleifen übermittelten Informationen abgespeichert werden. Bei kontinuierlicher Übertragung der Informationen, etwa über Funk oder eine LBZ, kann auf deren Speicherung u. U. verzichtet werden.

Stellt das Kontrollsystem fest, daß ein Streckenabschnitt als gefährlich eingestuft ist, dann prüft es in einem Schritt 4, ob eine Bedienperson die Überwachung des vorausliegenden Fahrweges übernommen hat. In Eisenbahnfahrzeugen läßt sich eine vorhandene Sicherheitsfahrschaltung (SIFA) zu diesem Zweck verwenden. Solche Schaltungen verlangen vom Triebfahrzeugführer, in bestimmten zeitlichen Mindestabständen eine (Fuß-)Taste zu betätigen. Falls die Taste nicht rechtzeitig gedrückt wird, etwa weil der Triebfahrzeugführer nicht anwesend oder ohnmächtig ist oder das Betätigen der Taste vergessen hat, so wird von der Schaltung eine Warnung ausgelöst und, bei Nichtbeachtung der Warnung, das Fahrzeug zum Stehen gebracht.

Es ist jedoch auch möglich, daß die Bedienperson den gefährlichen Streckenabschnitt überwacht, ohne den Fahrzeugführerstand aufzusuchen. Die Überwachung erfolgt dann mit Hilfe einer im Fahrzeug installierten Videoanlage. Eine an der Fahrzeugspitze angebrachte Videokamera übermittelt die Bilddaten an einen Monitor, der an einem beliebigen Ort innerhalb des Fahrzeuges angeordnet sein kann. Bei einem Schienentriebwagen könnte dieser Ort beispielsweise ein für den Zugbegleiter vorgesehenes Abteil sein. In diesem Abteil sind neben dem Monitor noch Vorrichtungen vorhanden, die eine der Sicherheitsfahrschaltung (SIFA) vergleichbare Funktion haben, d. h. die die Anwesenheit und Aufmerksamkeit der Bedienperson kontrollieren.

Wenn eine Bedienperson nachgewiesen hat, daß sie die Überwachung des Fahrweges im gefährlichen Streckenabschnitt übernommen hat, gibt das Kontrollsystem in einem Schritt 6 Bedienelemente frei, mit denen die Bedienperson die Fahrdynamik des Fahrzeuges beeinflussen kann. Falls die Bedienelemente dauerhaft freigegeben sind, entfällt dieser Schritt 6. Zumindest müssen diese Bedienelemente es der Bedienperson erlauben, das Fahrzeug mittels Not- oder betrieblichen Halt zum Stehen zu bringen. Außerdem sollte es der Bedienperson möglich sein, nach einem Nothalt und auch nach einem betrieblichen Halt, etwa an einem Haltepunkt, anzufahren. Vorzugsweise braucht die Bedienperson nur einen entsprechend gekennzeichneten Knopf zu betätigen, um ein Bremsen oder Anfahren auszulösen.

Wenn hingegen keine Bedienperson anwesend ist oder eine anwesende Bedienperson nicht nachgewiesen hat, daß sie die Überwachung des Fahrweges im gefährlichen Streckenabschnitt übernommen hat, dann bringt das Kontrollsystem in einem Schritt 5 das Fahrzeug zum Stehen. Alternativ ist es auch möglich, das Fahrzeug in diesem Falle nicht anzuhalten, sondern mit stark reduzierter Geschwindigkeit, z. B. Schrittgeschwindigkeit, in den gefährlichen Streckenabschnitt einfahren zu lassen. Ob und mit welcher Geschwindigkeit das Fahrzeug in den gefährlichen Streckenabschnitt einfahren kann, solange keine Bedienperson die Überwachung der Strecke übernimmt, hängt von der Art der im Streckenabschnitt vorhandenen Gefahr ab. Bei Arbeitsrotten auf dem Fahrweg kann es u. U. vertretbar sein, ein Passieren mit geringer Geschwindigkeit zuzulassen. Die Arbeitsrotten können dann durch automatisch ausgesandte akustische Signale auf das Herannahen des Fahrzeugs aufmerksam gemacht werden.

Wenn die Bedienperson beispielsweise ein Zugbegleiter ist, so können ihm die gefährlichen Streckenabschnitte vor Beginn der Fahrt mitgeteilt werden. Zusätzlich kann, wie oben erwähnt, die Bedienperson durch ein Warnsignal darauf aufmerksam zu machen, daß demnächst ein gefährlicher Streckenabschnitt durchfahren werden wird. Die Bedienperson muß dann nicht den Verlauf der Strecke verfolgen und hat dennoch genügend Zeit, die Überwachung der Strecke zu übernehmen. Denkbar ist auch, daß die Bedienperson ein Triebfahrzeugführer ist, der erst bei einem Halt vor Beginn des gefährlichen Streckenabschnitts auf das Fahrzeug kommt und nach Ende des oder mehrerer benachbarter gefährlicher Streckenabschnitte das Fahrzeug wieder verläßt. Vor allem beim Güterverkehr mit kleinen Ladungseinheiten, bei dem einzelne Fahrzeuge fahrerlos den nächstgelegenen Rangierbahnhof anfahren, ist diese Variante u. U. sinnvoll.

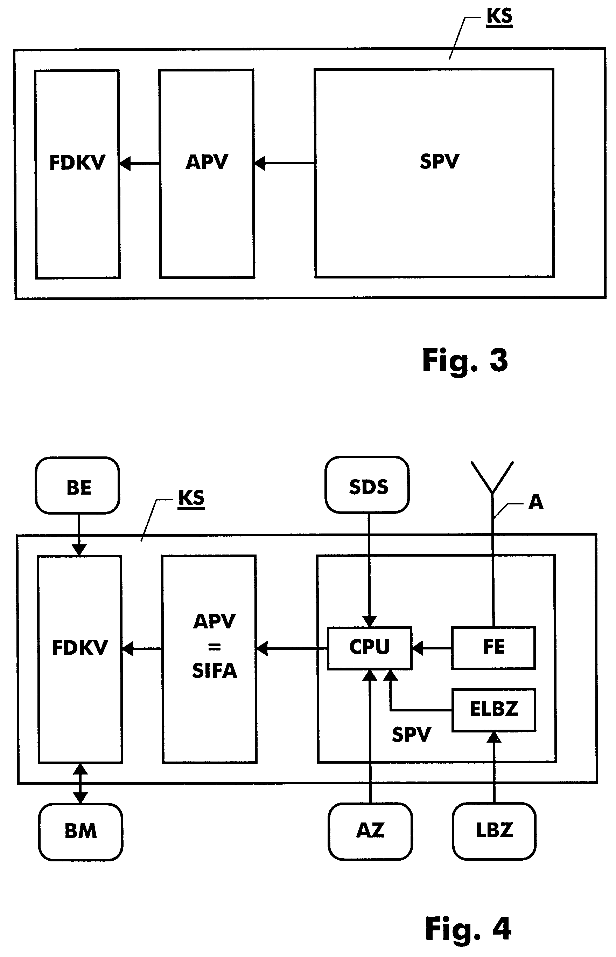

Fig. 3 zeigt ein erfindungsgemäßes Kontrollsystem KS, welches zur Ausführung des erfindungsgemäßen Verfahrens in spurgebundene Fahrzeuge eingebaut werden kann. Eine der wesentlichen Komponenten des Kontrollsystems ist eine Streckenprüf-Vorrichtung SPV, die überprüft, ob das Fahrzeug in einen gefährlichen Streckenabschnitt einfährt. Stellt die Streckenprüf-Vorrichtung SPV fest, daß das Fahrzeug in einen gefährlichen Streckenabschnitt einfährt oder im Begriffe ist einzufahren, so teilt sie dies einer Anwesenheitsprüf-Vorrichtung APV mit. Die Anwesenheitsprüf-Vorrichtung überprüft, ob eine Bedienperson die Überwachung des Fahrweges übernommen hat, und teilt das Ergebnis dieser Prüfung einer Fahrdynamikkontroll-Vorrichtung FDKV mit. Je nachdem, ob eine Bedienperson anwesend ist oder nicht, veranlaßt die Fahrdynamikkontroll-Vorrichtung FDKV die Freigabe von Bedienelementen, mit denen die Bedienperson gegebenenfalls einen Nothalt einleiten kann, oder aber sie bringt das Fahrzeug zum Stehen.

Die Länge gefährlicher Streckenabschnitte kann so definiert sein, daß der Bremsweg des Fahrzeugs der Länge des gefährlichen Steckenabschnittes zugeschlagen wird. In diesem Fall braucht die Streckenprüf-Vorrichtung SPV der Anwesenheitsprüf-Vorrichtung APV lediglich mitzuteilen, daß das Fahrzeug nun in einen gefährlichen Streckenabschnitt eingefahren ist. Wenn keine Bedienperson die Überwachung übernimmt, so bringt die Fahrdynamikkontroll-Vorrichtung FDKV das Fahrzeug zum Stehen, bevor der eigentlich gefährliche Streckenabschnitt erreicht ist. Alternativ kann die Fahrdynamikkontroll-Vorrichtung die Geschwindigkeit des Fahrzeugs lediglich vermindern, etwa auf Schrittgeschwindigkeit.

Fig. 4 zeigt ein bevorzugtes Ausführungsbeispiel eines erfindungsgemäßen Kontrollsystems KS. Die Streckenprüf-Vorrichtung SPV umfaßt hier einen Funkempfänger FE. Der Funkempfänger FE empfängt über eine Antenne A Informationen, wo gefährliche Streckenabschnitte sind. Vorzugsweise werden über diese Antenne der Streckenprüf-Vorrichtung SPV nur die Lage solcher Streckenabschnitte mitgeteilt, die zeitlich befristet als gefährlich eingestuft sind, etwa aufgrund von Bauarbeiten am Fahrweg.

Die Streckenprüf-Vorrichtung SPV umfaßt ferner einen zweiten Empfänger ELBZ. Dieser zweite Empfänger ELBZ ist mit im Fahrzeug vorhanden Vorrichtungen LBZ verbunden, mittels derer dem Fahrzeug über im Fahrweg angeordnete Leiter Informationen übermittelt werden. Derartige Vorrichtungen sind beispielsweise aus der Linienzugbeeinflussung bekannt.

Verwendet werden können aber auch andere ähnliche Systeme, die das automatische fahrerlose Fahren des Fahrzeugs unterstützen.

Beide Empfänger FE und ELBZ sind mit einem Rechner CPU verbunden, der aus den übermittelten Daten ermittelt, ob und wo gefährliche Streckenabschnitte sind oder nahen. Gegebenenfalls umfaßt die Streckenprüf-Vorrichtung SPV auch einen Streckendaten-Speicher SDS, in dem die Streckendaten und eventuell auch die gefährlichen Streckenabschnitte abgespeichert sind. Die Streckenprüf-Vorrichtung SPV kann auch mit anderen Vorrichtungen, etwa einem Achs-Umdrehungszähler AZ, verbunden sein, die für eine Lokalisierung des Fahrzeugs eingesetzt werden.

In diesem Ausführungsbeispiel ist die Anwesenheitsprüf-Vorrichtung APV eine Sicherheitsfahrschaltung (SIFA). Die Sicherheitsfahrschaltung SIFA teilt der Fahrdynamikkontroll-Vorrichtung FDKV mit, ob eine Bedienperson anwesend ist, die die Möglichkeit hat, den in Fahrtrichtung voraus liegenden Fahrweg zu überwachen. Ist dies nicht der Fall, so bringt die Fahrdynamikkontroll-Vorrichtung FDKV das Fahrzeug zum Stehen oder läßt das Fahrzeug mit verminderter Geschwindigkeit weiterfahren. Die Fahrdynamikkontroll-Vorrichtung FDKV ist zu diesem Zweck mit den Bremsen und den Motoren BM in geeigneter Weise verbunden. Ebenfalls mit der Fahrdynamikkontroll-Vorrichtung FDKV verbunden sind Bedienelemente BE, mit deren Hilfe die Bedienperson die bereits erwähnten Bedienhandlungen wie Einleiten eines Not- oder betrieblichen Halts und Anfahren vornehmen kann. Vorzugsweise werden als Fahrdynamikkontroll-Vorrichtung FDKV vorhandene Vorrichtungen ganz oder teilweise genutzt, die das fahrerlose Fahren des Fahrzeugs ermöglichen.

## Patentansprüche

1. Verfahren zum Betrieb eines spurgebundenen Fahrzeugs, welches Vorrichtungen zur Durchführung eines automatischen fahrerlosen Verkehrs hat,
**gekennzeichnet durch folgende Schritte**:
a) ein Kontrollsystem überprüft, ob das Fahrzeug in einen als gefährlich eingestuften Streckenabschnitt einfährt oder sich einem solchen Streckenabschnitt nähert, und
b) nur falls Schritt a) zu einem positiven Ergebnis führt, überprüft das Kontrollsystem ob eine Bedienperson im Fahrzeug anwesend ist, die die Möglichkeit hat, den in Fahrtrichtung voraus liegenden Fahrweg zu überwachen, und die gegebenenfalls einen Bremsvorgang einleiten kann, wobei. das Kontrollsystem einen Bremsvorgang des Fahrzeugs veranlaßt, wenn die Überprüfungen ergeben, daß das Fahrzeug in einen als gefährlich eingestuften Streckenabschnitt einfährt oder sich einem solchen Streckenabschnitt nähert und daß keine Bedienperson im Fahrzeug anwesend ist, die die Möglichkeit hat, den in Fahrtrichtung voraus liegenden Fahrweg zu überwachen, und die gegebenenfalls einen Bremsvorgang einleiten kann.

2. Verfahren nach Anspruch 1, bei dem das Kontrollsystem die Geschwindigkeit in der Weise verändert, daß das Fahrzeug zum Stehen gebracht wird.

3. Kontrollsystem (KS) zum Einbau in ein spurgebundenes Fahrzeug, welches Vorrichtungen zur Durchführung eines automatischen fahrerlosen Verkehrs hat,
**dadurch gekennzeichnet,**
a) daß das Kontrollsystem (KS) eine Streckenprüf-Vorrichtung (SPV) umfaßt, die überprüft, ob das Fahrzeug in einen als gefährlich eingestuften Streckenabschnitt einfährt, und
b) daß das Kontrollsystem (KS) eine Anwesenheitsprüf-Vorrichtung (APV) umfaßt, die, nur beim Vorliegen eines positiven Streckenprüfungsergebnis, überprüft, ob eine Bedienperson im Fahrzeug anwesend ist, die die Möglichkeit hat, den in Fahrtrichtung voraus liegenden Fahrweg zu überwachen, und die gegebenenfalls einen Bremsvorgang einleiten kann,
c) daß das Kontrollsystem eine Fahrdynamikkontroll-Vorrichtung (FDKV) umfaßt, die die Geschwindigkeit des Fahrzeugs in vorgebbarer Weise verändert, wenn das Kontrollsystem (KS) feststellt, daß das Fahrzeug in einen als gefährlich eingestuften Streckenabschnitt einfährt und daß keine Bedienperson im Fahrzeug anwesend ist, die die Möglichkeit hat, den in Fahrtrichtung voraus liegenden Fahrweg zu überwachen, und die gegebenenfalls einen Bremsvorgang einleiten kann.

4. Kontrollsystem (KS) nach Anspruch 3, bei dem die Anwesenheitsprüf-Vorrichtung (APV) eine Sicherheitsfahrschaltung ist.

5. Kontrollsystem (KS) nach einem der Ansprüche 3 oder 4, bei dem die Streckenprüf-Vorrichtung (SPV) auf einen Streckendaten-Speicher (SDS) Zugriff hat, in dem gefährliche Streckenabschnitte gespeichert sind.

6. Kontrollsystem (KS) nach einem der Ansprüche 3 bis 5, bei dem die Streckenprüf-Vorrichtung (SPV) einen Empfänger (E, FE) hat, der von einem außerhalb des Zuges liegenden Sender über Funk oder über ein in die Strecke integriertes Übermittlungssystem mitgeteilt bekomm en kann, wo ein gefährlicher Streckenabschnitt ist.

7. Kontrollsystem (KS) nach einem der Ansprüche 3 bis 6, welches eine Videoanlage umfaßt, die es der Bedienperson erlaubt, den vor dem Fahrzeug in Fahrtrichtung liegenden Fahrweg zu überwachen.

8. Kontrollsystem (KS) nach einem der Ansprüche 3 bis 7, welches Bedienelemente (BE) umfaßt, die es der Bedienperson erlauben, einen Nothalt oder einen betrieblichen Halt oder ein Weiterfahren nach einem Nothalt oder betrieblichen Halt einzuleiten.

9. Kontrollsystem (KS) nach einem der Ansprüche 3 bis 8, welches eine Warnvorrichtung (WV) umfaßt, die die Bedienperson warnt, wenn das Fahrzeug in einen als gefährlich eingestuften Streckenabschnitt einfährt.

## Claims

1. Operation method for a railway vehicle which has devices for effecting automatic driverless transportation, characterized by the following steps:
a) a control system checks whether the vehicle is entering a track section classified as dangerous or is approaching such a track section, and
b) only if step (a) leads to a positive result, the control system checks whether an operator is present in the vehicle who has the possibility of watching the travel path lying ahead in the direction of travel, and can if necessary initiate a braking process,
the control system initiating a braking process of the vehicle if the checks reveal that the vehicle is entering a section of track classified as dangerous or is approaching such a track section, and that no operator is present in the vehicle who has the possibility of watching the travel path lying ahead in the direction of travel and who can if necessary initiate a braking process.

2. Method according to claim 1, in which the control system changes the speed in such a way that the vehicle is brought to a stop.

3. Control system (KS) for installation in a railway vehicle, which has devices for effecting automatic driverless transportation, characterized in that
a) the control system (KS) comprises a track checking device (SPV), which checks whether the vehicle is entering a track section classified as dangerous, and
b) the control system (KS) comprises a presence-checking device (APV), which, only in the event of a positive track checking result being received, checks whether an operator is present in the vehicle who has the possibility of watching the travel path lying ahead in the direction of travel, and can if necessary initiate a braking process,
c) the control system comprises a vehicle movement dynamics control device (FDKV), which changes the speed of the vehicle in a predeterminable manner if the control system (KS) ascertains that the vehicle is entering a track section classified as dangerous and that no operator is present in the vehicle who has the possibility of watching the travel path lying ahead in the direction of travel and can if necessary initiate a braking process.

4. Control system (KS) according to claim 3, in which the presence-checking device (APV) is a dead man's handle.

5. Control system (KS) according to one of claims 3 or 4, in which the track checking device (SPV) has access to a track data storage device (SDS), in which dangerous track sections are stored.

6. Control system (KS) according to one of claims 3 to 5, in which the track checking device (SPV) has a receiver (E, FE), which can be notified by a transmitter lying outside the train via radiotelegraphy or via a transmission system integrated into the track where a dangerous track section is.

7. Control system (KS) according to one of claims 3 to 6, which comprises a video system, which enables the operator to watch the travel path lying ahead of the vehicle in the direction of travel.

8. Control system (KS) according to one of claims 3 to 7, which comprises operating elements (BE), which enable the operator to initiate an emergency stop or an operating stop or onward travel following an emergency stop or operating stop.

9. Control system (KS) according to one of claims 3 to 8, which comprises a warning device (WV), which warns the operator if the vehicle is entering a track section classified as dangerous.

## Revendications

1. Procédé pour l'exploitation d'un véhicule guidé qui dispose de dispositifs pour effectuer une circulation automatique sans conducteur, caractérisé par les étapes suivantes :
a) un système de contrôle vérifie si le véhicule pénètre dans une section de parcours classée comme dangereuse ou s'approche d'une telle section de parcours, et seulement si l'étape a) aboutit à un résultat positif,
b) le système de contrôle vérifie si dans le véhicule se trouve un opérateur qui a la possibilité de surveiller la voie située devant dans le sens de la marche et qui peut éventuellement déclencher un processus de freinage, le système de contrôle provoquant un processus de freinage du véhicule quand les vérifications aboutissent à ce que le véhicule pénètre dans une section de parcours classée comme dangereuse ou s'approche d'une telle section de parcours et que dans le véhicule ne se trouve aucun opérateur qui a la possibilité de surveiller la voie située devant dans le sens de la marche et qui peut éventuellement déclencher un processus de freinage.

2. Procédé selon la revendication 1, dans lequel le système de contrôle fait varier la vitesse de sorte que le véhicule est amené à s'arrêter.

3. Système de contrôle (KS) à installer dans un véhicule guidé qui dispose de dispositifs pour effectuer une circulation automatique sans conducteur, caractérisé en ce que
a) le système de contrôle (KS) comprend un dispositif de vérification de parcours (SPV) qui vérifie si le véhicule pénètre dans une section de parcours classée comme dangereuse, et
b) le système de contrôle (KS) comprend un dispositif de vérification de présence (APV) qui vérifie, seulement dans le cas d'un résultat positif de vérification de parcours, si dans le véhicule se trouve un opérateur qui a la possibilité de surveiller la voie située devant dans le sens de la marche et qui peut déclencher éventuellement un processus de freinage,
c) le système de contrôle comprend un dispositif de contrôle de dynamique du mouvement des véhicules (FDKV) qui fait varier la vitesse du véhicule d'une manière prédéfinissable quand le système de contrôle (KS) détermine que le véhicule pénètre dans une section de parcours classée comme dangereuse et que dans le véhicule ne se trouve aucun opérateur qui a la possibilité de surveiller la voie située devant dans le sens de la marche et qui peut éventuellement déclencher un processus de freinage.

4. Système de contrôle (KS) selon la revendication 3, dans lequel le dispositif de vérification de présence (APV) est une veille automatique.

5. Système de contrôle (KS) selon l'une quelconque des revendications 3 ou 4, dans lequel le dispositif de vérification de parcours (SPV) a accès à une mémoire de données de parcours (SDS) dans laquelle sont mémorisées des sections de parcours dangereuses.

6. Système de contrôle (KS) selon l'une quelconque des revendications 3 à 5, dans lequel le dispositif de vérification de parcours (SPV) a un récepteur (E, FE) qui peut être informé par radio d'un émetteur se trouvant à l'extérieur du train, ou par un système de transmission intégré dans la voie, de l'endroit où se situe une section de parcours dangereuse.

7. Système de contrôle (KS) selon l'une quelconque des revendications 3 à 6 comprenant une installation vidéo qui permet à l'opérateur de surveiller la voie de circulation située devant le véhicule dans la direction de la marche.

8. Système de contrôle (KS) selon l'une quelconque des revendications 3 à 7 comprenant des éléments de commande (BE) qui permettent à l'opérateur de déclencher un arrêt d'urgence ou un arrêt de service ou un nouveau départ après un arrêt d'urgence ou un arrêt de service.

9. Système de contrôle (KS) selon l'une quelconque des revendications 3 à 8 comprenant un dispositif d'avertissement (WV) qui avertit l'opérateur quand le véhicule pénètre dans une section de parcours classée comme dangereuse.
